# EUROPEAN PATENT APPLICATION

(11) **EP 2 759 495 A1**
(43) Date of publication of application: **30.07.2014**
(21) Application number: 13152941.4
(22) Date of filing: 28.01.2013
(51) Int. Cl.: B65G 29/00, B65G 47/86, B67C 3/00, B67C 7/00

(54) **System and method for operating a machine for processing of containers having cooperating rotating parts**

(71) Applicant: Sidel S.p.a. Con Socio Unico, Parma (IT)
(72) Inventor: Sorbi, Federica, 43100 PARMA (IT)
(74) Representative: D'Angelo, Fabio

(57) **Abstract**

A system is disclosed for operating a machine (1) for processing of containers, having at least a first (20) and a second (25) cooperating rotating parts with respective peripheral units (22, 26) designed to cooperate for the processing of the containers. At the occurrence of a given operating condition, which may cause a mechanical interference between the respective peripheral units (22, 26) of the first (20) and second (25) rotating parts, a relative displacement of the first (20) and second (25) rotating parts is implemented, to avoid the mechanical interference.

## Description

The present invention relates to a system and to a method for operating a processing machine, in particular for processing of containers for food products, having cooperating rotating parts.

The following discussion will make exemplary reference, without this implying any loss of generality, to a filling machine, designed for filling bottles or similar containers with a fluid food product.

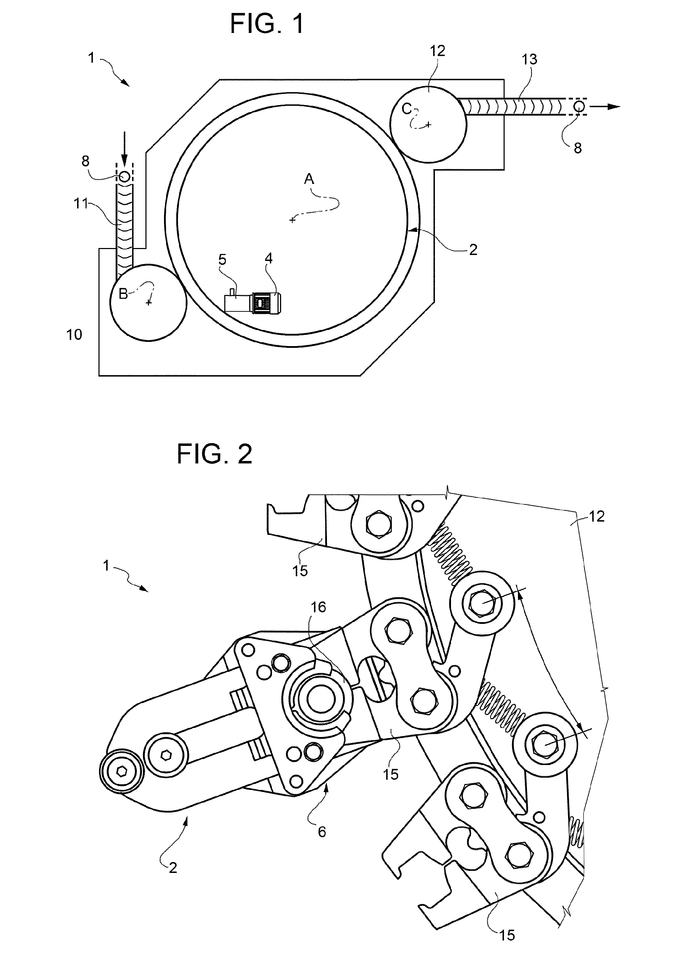

As shown in Figures 1 and 2, an exemplary processing machine 1, of a known type, in particular a filling machine, includes a main rotating part 2, which rotates around a first axis A, driven by a first electric motor 4, e.g. a brushless synchronous motor; a first position sensor 5, e.g. an incremental encoder, is coupled to the main rotating part 2, and provides position information about the rotary motion thereof, which may be used by a control unit (here not shown) of the first electric motor 4, to implement a position feedback control of its operation.

The main rotating part 2 carries at its periphery a number of filling units 6 (one of which is shown in Figure 2), each designed to carry a respective bottle (or other container) and configured to perform a filling operation of the same bottle with one or more fluids.

The processing machine 1 further includes a conveying arrangement, including a number of transfer star wheels or similar conveying elements, designed to transfer the containers towards, and from, the main rotating part 2.

In particular, the conveying arrangement includes: at least an input star wheel 10, which receives containers 8 to be filled from an input line 11; and at least an output star wheel 12, which transfer the filled containers 8 from the main rotating part 2 to an outlet line 13.

Each input and output star wheel 10, 12 rotates around a respective axis of rotation B, C and carries the articles to be transferred along its periphery, by means of a plurality of gripping units 15 (a number of which is shown in Figure 2), distributed along the same periphery. Each input and output star wheel 10, 12 is provided with a respective electric motor, e.g. a synchronous brushless motor (with a suitable control unit and position sensor, not shown), to independently drive its rotary motion.

In the processing machine 1, a common problem may arise concerning the cooperation of the various rotating parts, especially during specific operating conditions. Indeed, there are some operating conditions where mechanical interference may occur between the different rotating parts, in particular between peripheral units thereof.

For example, during a so called CIP (Cleaning In Place) operating condition of the processing machine 1, dummy bottles (denoted with 16 in Figure 2) are introduced in the filling units 6, instead of the normal containers 8, while a cleaning agent is used to clean the various parts of the processing machine 1.

The diameter of these dummy bottles 16 may be different, in particular higher, than the diameter of the containers 8, which are filled during normal operation of the processing machine 1. Therefore, mechanical interference may occur between the filling units 6 carrying the dummy bottles 16 during the CIP process, and the gripping units 15 at the periphery of the input and/or output star wheels 10, 12, during the independent rotation thereof.

In this regard, Figure 2 shows an enlargement of a peripheral portion of a star wheel, e.g. the output star wheel 12 (but similar considerations may apply to the input star wheel 10), showing a number of gripping units 15, distributed along the periphery at a regular pitch.

Figure 2 also shows, as an example, part of a facing peripheral portion of a filling unit 6 of the main rotating part 2 of the processing machine 1, carrying a dummy bottle 16.

The independent rotation of the main rotating part 2 and of the input (or output) star wheel 10 (12) may cause the occurrence of a mechanical interference between the filling units 6 and the gripping units 15.

As a consequence, the operation of the processing machine 1 may be impaired, due to damages, misalignments, or other kind of intervening mechanical problems. The correct operation of the processing machine 1, and the general efficiency of the processing operations being performed, may thus be jeopardized.

The aim of the present invention is consequently to solve, at least in part, the problem previously highlighted, and in particular to provide an improved solution for operating a processing machine having cooperating rotating parts, to avoid occurrence of mechanical interference.

According to the present invention, a system and a method for operating a processing machine are provided, as defined in the appended claims.

For a better understanding of the present invention, preferred embodiments thereof are now described, purely by way of a non-limiting example, with reference to the attached drawings, wherein:
- Figure 1 is a diagrammatic top view of an exemplary processing machine, for processing of containers for food products;
- Figure 2 shows an enlarged portion of the machine of Figure 1;
- Figures 3a-3c show simplified diagrammatic top view of rotating parts of a processing machine, in different operating conditions, according to an aspect of the present solution;
- Figure 4 shows an enlarged portion of the processing machine, in the operating condition of Figure 3b; and
- Figure 5 is a flow chart of operations performed in the processing machine.

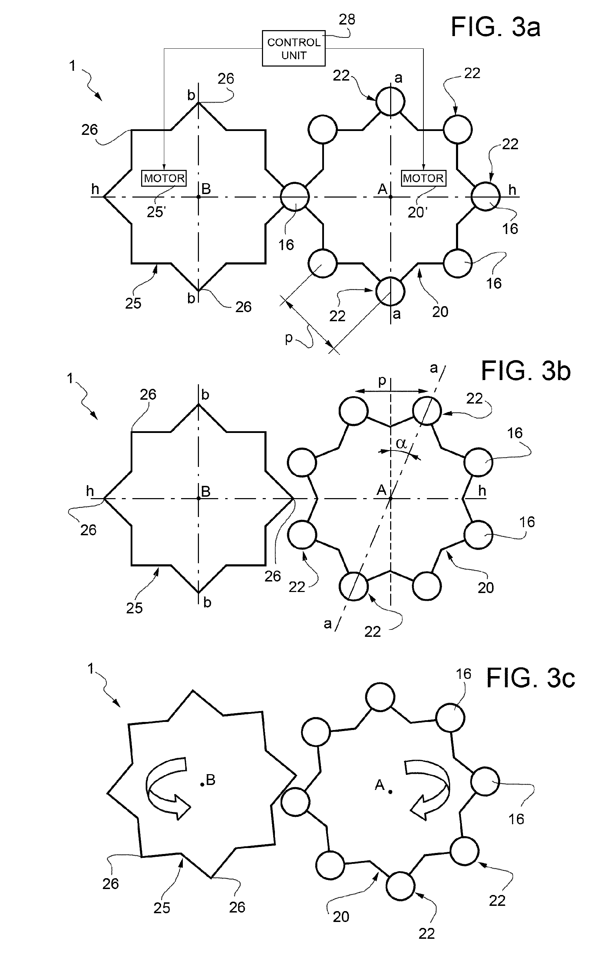

Figure 3a schematically shows portions of an operating system of a processing machine, again denoted with 1, including at least a first rotating part 20, carrying at its periphery a number of peripheral processing units 22, angularly equally spaced around a first rotating axis, denoted with A; in particular, the peripheral processing units 22 are mutually arranged at a distance or pitch p.

For example, the first rotating part 20 is a filler of the processing machine 1 and the peripheral processing units 22 are filling units, each designed to fill, during a normal operating condition, a respective container, e.g. a bottle, with a fluid food product.

The first rotating part 20 has a median axis of symmetry a-a, on which the first rotating axis A lies, and at which a couple of peripheral processing units 22 are arranged, opposite with respect to the first rotating axis A.

The processing machine 1 includes at least a second rotating part 25, carrying at its periphery a number of respective peripheral processing units 26, angularly equally spaced around a second rotating axis B.

For example, the second rotating part 25 is a transfer star wheel of the processing machine 1, and the peripheral processing units 26 are gripping units, designed to cooperate with the filling units of the first rotating part 20, in order to transfer filled containers away from the first rotating part 20, or to transfer containers to be filled towards the same first rotating part 20.

The second rotating part 25 has a respective median axis of symmetry b-b, on which the second rotating axis B lies, and at which a couple of peripheral processing units 26 are arranged, opposite with respect to the second rotating axis B.

The median axes of symmetry a-a, b-b of the first and second rotating parts 20, 25 are parallel to each other in a still or stop operating condition of the processing machine 1 (as shown in Figure 3a).

Moreover, the peripheral processing units 22, 26 are angularly arranged around the respective first and second rotating axes A, B so that they are operable to cooperatively engage (e.g. to allow transfer of the bottles or other containers) during rotation thereof; in the example, the peripheral processing units 22, 26 are configured to face each other along an alignment axis h-h, passing through the first and second rotating axes A, B and orthogonal to the median axes of symmetry a-a, b-b.

Each of the first and second rotating parts 20, 25 is provided with a respective electric motor, e.g. a synchronous brushless motor 20', 25', designed to independently control its rotary motion.

The processing machine 1 further includes a control unit 28 (e.g. including a PLC - Programmable Logic Controller, a microprocessor, or microcontroller), coupled to the first and second rotating parts 20, 25 in order to provide the respective electric motors 20', 25' with high level driving commands, in order to control the timed synchronized rotation of the same first and second rotating parts 20, 25, such as to allow cooperating engagement between the respective peripheral units 22, 26 during normal operating conditions (e.g. to allow transfer of the bottles or other containers).

In a possible embodiment, the control unit 28 is coupled to the respective electric motors 20', 25' of the first and second rotating parts 20, 25 via a digital communication bus (e.g. a field bus), transferring digital information, signals and commands.

In particular, Figure 3a shows a potential interference-causing operating condition wherein mechanical interference may occur between the respective peripheral processing units 22, 26 of the first and second rotating parts 20, 25; for example, the interference-causing operating condition may correspond to a CIP (Cleaning In Place) operating condition where dummy bottles, again denoted with 16 are introduced in the filling units of the first rotating part 20.

In particular, Figure 3a refers to a starting condition, wherein the first and second rotating parts 20, 25 are still and not moving (the processing machine 1 is in a stop condition).

As shown in Figure 3b, an aspect of the present solution envisages determination, by the control unit 28, of the occurrence of the interference-causing operating condition, and, upon this determination, the execution of a proper relative displacement between the first and second rotating parts 20, 25, before starting of the actual rotation of the same first and second rotating parts 20, 25 (according to the operations to be performed during the same interference-causing operating condition).

For example, the control unit 28 may cause an angular displacement of the first rotating part 20, with respect to the rotating axis A, as denoted by the offset of the median axis of symmetry a-a with respect to a normal operating condition, which represents a starting position for the following rotating motion of the first rotating part 20.

In the example, the angular displacement is represented by a shift angle α, having a non-zero value, which corresponds to half of the pitch p between the peripheral processing units 22 of the first rotating part 20; in general, the shift angle α may correspond to a proper fraction of the pitch p.

In particular, in the case where the pitch is normalized to a value of 360° (i.e. an angular displacement of 360° of a virtual axis corresponds to a displacement equal to a pitch p), the normalized value of the shift angle α may be equal to 180°.

As shown in Figure 3b, after the relative displacement, a peripheral processing unit 26 of the second rotating part 25 lies on the alignment axis h-h, while corresponding adjacent peripheral processing units 22 of the first processing unit 20 are arranged symmetrically with respect to the same alignment axis h-h.

After the relative displacement between the first and second rotating parts 20, 25, the control unit 28 of the processing machine 1 control the synchronized rotation of the same first and second rotating parts 20, 25 around the respective rotating axes A, B (in the example, opposite rotations are envisaged, one in a clockwise direction and the other in an anticlockwise direction).

As schematically shown in Figure 3c, thanks to the initial relative displacement (or angular offset), mechanical interference between the peripheral processing units 22, 26 of the first and second rotating parts 20, 25 may be avoided, during the interference-causing operating condition (in the example, the CIP operating condition).

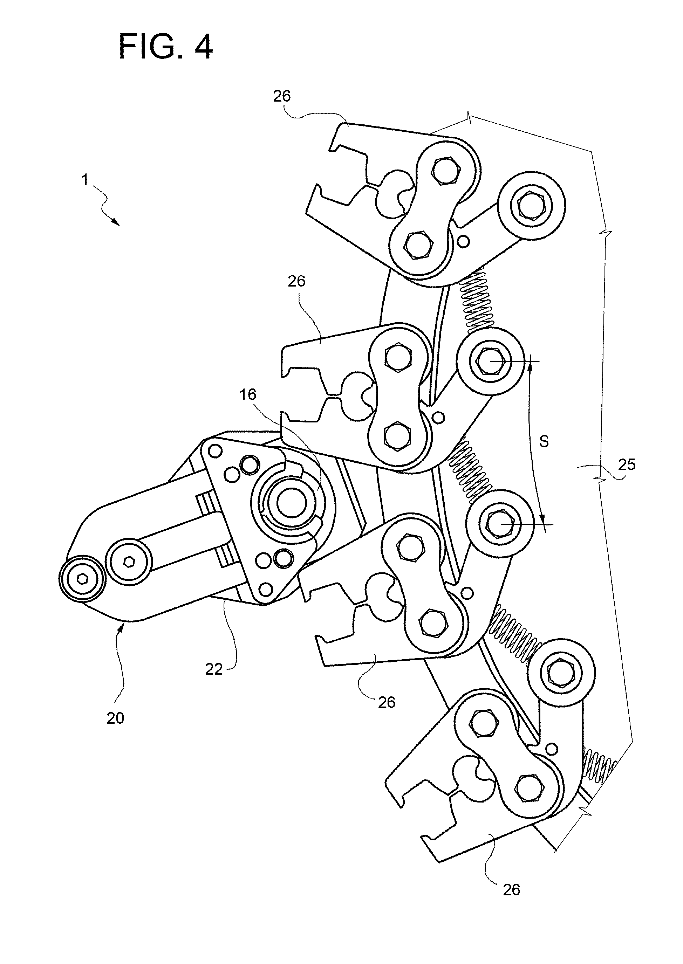

As shown in more details in Figure 4, during the rotation in the interference-causing operating condition, the peripheral processing units 22 of the first rotating part 20, in the example filling units carrying dummy bottles 16, do not interfere with the respective peripheral processing units 26 of the second rotating part 25, in the example gripping units.

In particular, a peripheral processing unit 22 of the first rotating part 20 is generally located, during its rotation, in an angular region S defined between two adjacent peripheral processing units 26 of the second rotating part 25, thereby avoiding mechanical interference with the same peripheral processing units 26.

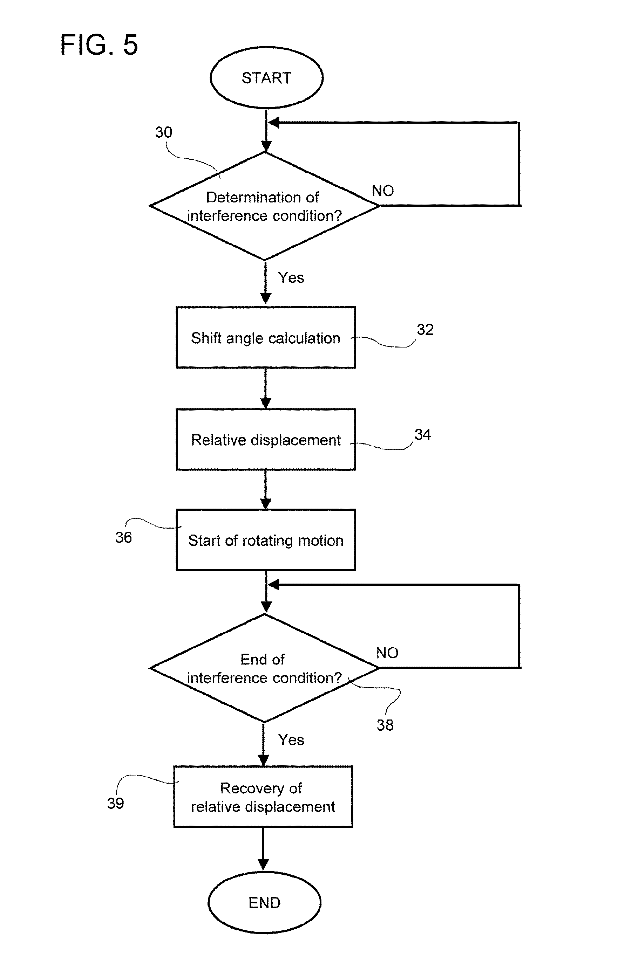

Operations performed by the processing machine according to an aspect of the present solution are now discussed with respect to Figure 5.

In detail, at a first step 30, the control unit 28 determines that the processing machine 1 is about to enter an interference-causing operating condition wherein mechanical interference may occur between the respective peripheral units 22, 26 of the first and second rotating parts 20, 25.

Upon this determination, the control unit 28 calculates a proper value for the shift angle α, step 32, in order to drive a proper relative displacement between the first and second rotating parts 20, 25, at step 34.

The actual value for the shift angle α is variable, and may be calculated based on the nature of the interference-causing operating condition that has been determined, e.g. as a function of the size of the dummy bottles 16 introduced in the peripheral units 22 of the first rotating part 20 for the CIP operation.

After the relative displacement has been executed, rotation of the first and second rotating parts 20, 25 is then started by the control unit 28, at step 36, and the operations envisaged by the interference-causing operating condition are performed in an usual manner (e.g. the cleaning in place operation is performed on the various parts of the processing machine 1).

Afterwards, when the control unit 28 determines the end of the interference-causing operating condition, at step 38, the same control unit 28 then controls rotation of the first and second rotating parts 20, 25 to recover the offset by the shift angle α; for example, the median axes a-a and b-b of the first and second rotating parts 20, 25 are returned in a parallel arrangement (as shown in Figure 3a). In this way, the first and second rotating parts 20, 25 are ready for a subsequent normal operating condition where no mechanical interference is designed to occur, and instead transfer of the containers is allowed between the same first and second rotating parts 20, 25, via the cooperating engagement of the respective peripheral units 22, 26.

The advantages that the described solution allows to achieve are clear from the foregoing description.

In particular, it is underlined that mechanical interference between first and second rotating parts 20, 25 of the processing machine 1 is avoided, or in any case the risk of mechanical interference occurring is greatly reduced.

Accordingly, the correct operation of the processing machine 1, and the general efficiency of the processing operations being performed, are assured, even in particular operating conditions, which might cause mechanical interference.

Finally it is clear that modifications and variations may be applied to the system described and shown, without departing from the scope of the appended claims.

According to a possible embodiment, each one of the first and second rotating parts 20, 25 may be provided with respective control units (e.g. including a respective PLC) designed to control the respective electric motors 20', 25'.

In this case, the control unit of the first (or second) rotating part 20 (25) may act as a master unit, while the control unit of the second (or first) rotating part 25 (20) may act as a slave unit, whose operation is slaved and synchronized to the master unit.

The master and slave control units may be coupled via a digital communication bus, like a Ethernet-based fieldbus, such as PowerLink.

The slave control unit may be configured to carry out suitable program and software instructions, in order to synchronize the rotating motion of the respective rotating part to the rotating motion of the master control unit of the other rotating part. The angular offset by the shift angle α may be determined by the master control unit, cooperating with the slave control unit.

In a possible embodiment, both the first and the second rotating parts 20, 25 may undergo a respective angular displacement with respect to the respective rotating axis A, B, in order to jointly determine the angular displacement, which allows to avoid the mechanical interference.

Moreover, it is clear that the discussed solution may be applied also where a greater number of rotating parts are to be operatively coupled, e.g. in a bottling plant including also a blower machine, a labeller machine, a capping machine and/or a pasteurization machine, in addition to, or in substitution of, the filler machines.

In general, the described solution may be advantageously applied in any case where two or more rotating parts are to be operatively coupled in a processing machine.

Accordingly, the type and configuration of the elementary parts of the processing machine 1, previously shown and discussed, are to be considered only as an exemplary embodiment.

## Claims

1. A system for operating a machine (1) for processing of containers, having cooperating rotating parts (20, 25) including at least a first (20) and a second (25) rotating parts having respective peripheral units (22, 26) designed to cooperate for the processing of the containers,
**characterized in that**, at the occurrence of a given operating condition, which may cause a mechanical interference between the respective peripheral units (22, 26) of the first (20) and second (25) rotating parts, a relative displacement between the first (20) and second (25) rotating parts is designed to be implemented, to avoid said mechanical interference.

2. The system according to claim 1, wherein each one of the first (20) and second (25) rotating parts has a respective electric motor (20', 25') operable to drive said first (20) and second (25) rotating parts around a respective first (A) and second (B) rotating axis; wherein, upon the occurrence of the given operating condition, the electric motor (20', 25') of at least one of the first (20) and second (25) rotating parts is operable to determine an angular displacement (α) around the respective first (A) or second (B) rotating axis, to implement the relative displacement between the first (20) and second (25) rotating parts.

3. The system according to claim 1 or 2, including a control unit (28) configured to determine the occurrence of the given operating condition, and, upon this determination, to implement the relative displacement between the first (20) and second (25) rotating parts.

4. The system according to any of the preceding claims, wherein, after the relative displacement between the first (20) and second (25) rotating parts is implemented, rotation of the first (20) and second (25) rotating parts is designed to be resumed, according to the given operating condition.

5. The system according to any of the preceding claims, wherein the peripheral units (22, 26) of the first (20) and/or second (25) rotating parts are angularly arranged at a pitch (p); and wherein the relative displacement between the first (20) and second (25) rotating parts is a function of said pitch (p).

6. The system according to claim 5, wherein the relative displacement between the first (20) and second (25) rotating parts corresponds to a proper fraction of said pitch (p).

7. The system according to claim 5 or 6, wherein the relative displacement between the first (20) and second (25) rotating parts corresponds to half of said pitch (p).

8. The system according to any of the preceding claims, wherein the machine (1) is a filling machine for filling containers with a fluid product, and the first rotating part (20) is a filler having a number of filling units as the respective peripheral units (22), and the second rotating part (25) is a transfer star wheel, coupled to the filler, and having a number of gripping units as the respective peripheral units (26); wherein the given operating condition is a CIP - Cleaning In Place - condition of the machine (1), whereby dummy containers (16) are introduced in the filler units of the filler and may cause mechanical interference with the gripping units of the transfer star wheel.

9. A processing machine (1) for processing of containers, including at least a first (20) and a second (25) rotating parts having respective peripheral units (22, 26) designed to cooperate for the processing of the containers; wherein the processing machine (1) includes a system, according to any of the preceding claims.

10. A method for operating a machine (1) for processing of containers, having cooperating rotating parts (20, 25) including at least a first (20) and a second (25) rotating parts having respective peripheral units (22, 26) designed to cooperate for the processing of the containers,
**characterized by** comprising, at the occurrence of a given operating condition, which may cause a mechanical interference between the respective peripheral units (22, 26) of the first (20) and second (25) rotating parts, the step of implementing a relative displacement between the first (20) and second (25) rotating parts, to avoid said mechanical interference.

11. The method according to claim 10, including the step of determining the occurrence of the given operating condition, and, upon this determination, said step of implementing the relative displacement between the first (20) and second (25) rotating parts.

12. The method according to claim 11, further including, after the relative displacement between the first (20) and second (25) rotating parts is implemented, the step of resuming rotation of the first (20) and second (25) rotating parts, according to the given operating condition.

13. The method according to any of claims 10-12, wherein said first (20) and second (25) rotating parts are rotatable around a respective first (A) and second (B) rotating axis; further including the step of determining an angular displacement (α) of the first (20) and/or second (25) rotating parts around the respective first (A) and second (B) rotating axes, to implement said relative displacement.

14. The method according to claim 13, wherein the peripheral units (22, 26) of the first (20) and/or second (25) rotating parts are angularly arranged at a pitch (p); and wherein said step of determining includes calculating said angular displacement (α) as a function of said pitch (p).

15. A computer program product, including software instructions configured to implement, when executed in a control unit (28), the method according to any of claims 10-14.
